# EUROPEAN PATENT SPECIFICATION

(11) **EP 0 864 465 B1**
(45) Date of publication and mention of the grant of the patent: **04.09.2002**
(21) Application number: 98301520.7
(22) Date of filing: 02.03.1998
(51) Int. Cl.: B60R 1/06, B60R 1/02

(54) **Vehicle rear view mirror**
Rückspiegel für Kraftfahrzeuge
Rétroviseur pour véhicule

(30) Priority: 15.03.1997 GB 9705441
(43) Date of publication of application: 16.09.1998
(73) Proprietor: BRITAX (GECO) S.A., F-77981 St. Fargeau-Ponthierry Cédex (FR)
(72) Inventor: Cluet, Yves, 77250 Veneux les Sablons (FR); Duroux, Bernard, 78890 Garanciers (FR)
(74) Representative: Price, Nigel John King

(56) References cited:
- EP-A- 0 567 245
- DE-A- 19 528 841
- US-A- 4 331 382
- PATENT ABSTRACTS OF JAPAN vol. 009, no. 172 (M-397), 17 July 1985 & JP 60 044316 A (KANTOU SEIKI KK), 9 March 1985

## Description

This invention relates to a vehicle mirror of the type comprising a housing, a reflective member, mounting means provided on the inside of the housing and means for attaching the rear surface of the reflective member to the mounting means.

EP-A-0567245 discloses a mirror of this type in which the reflective member comprises a mirror glass which is secured by adhesive to a backing plate moulded from plastics material. The backing plate has formations which interlock with complementary formations on the mounting means. It is an object of the present invention to provide a rear view mirror of the type described above in which a separate backing plate is not necessary.

According to the invention, in a vehicle mirror of the type described above, the reflective member is moulded from plastics material and has a reflective coating on at least part of its front surface and formations on its rear surface adapted to interlock with complementary formations on the mounting means.

The mounting means may comprise means for varying the orientation of the reflective member relative to the housing.

The invention is particularly applicable to vehicle mirrors with aspheric reflective members. The front surface of the reflective member has a main zone providing the legally required field of view, together with a zone of higher curvature which is used to eliminate the well known "blind spot" beside the vehicle and immediately behind the driver, as described in US-A-4331382. According to the invention, the reflective coating is confined to the. zone of higher curvature and a silvered glass reflective member is moulded into the plastics reflective member to provide the normal zone.

One embodiment of the invention will now be described with reference to the accompanying drawings, in which:
Figure 1 is an elevation from the rear of a reflective member showing the mounting means behind the reflective member partially broken away;
Figure 2 is a cross-sectional view taken on the line 2-2 in Figure 1;
Figure 3 is a cross-sectional view similar to Figure 2 of a modified reflective member;
Figure 4 is a cross-sectional view of a rear view mirror having means for adjusting the orientation of the reflective member relative to the mirror case;
Figure 5 is a front view of a rear view mirror in accordance with the present invention; and
Figure 6 is a cross-sectional view on the line 6-6 in Figure 5.

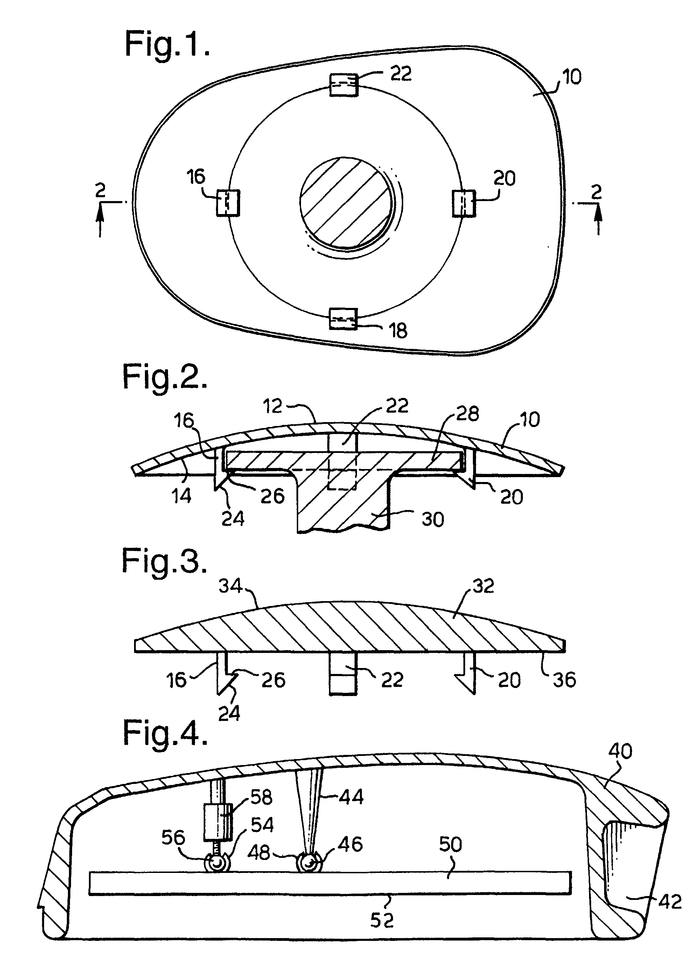

Figures 1 and 2 show a reflective member 10 for a vehicle mirror which is moulded from plastics material and has a reflective coating on its front convex surface 12. The reflective member 10 is parallel-sided, having a concave rear surface 14, from which four integrally moulded lugs 16, 18, 20 and 22, each of which has a ramp face 24 leading to a detent edge 26. The four lugs 16-22 are spaced apart with their ramps 24 and detents 26 facing inwardly so as to be a snap fit over a circular disk 28 formed on an end of a support pillar 30 which projects within a mirror case (not shown).

Figure 3 illustrates another reflective member 32 having a convex surface 34 carrying a reflective coating similar to the surface 12 of Figures 1 and 2. However, the rear surface 36 of the reflective 32 is flat, with the result that the reflective member 32 is of non-uniform thickness. Integral lugs 16-22, similar to the correspondingly referenced lugs of Figures 1 and 2 project from the surface 36.

It should be appreciated that, the radius of curvature of the convex surfaces 12 and 34 would, in practice, be about two metres; the curvature has been exaggerated in Figures 2 and 3.

Figure 4 shows a vehicle exterior mirror having a housing 40 with an end 42 adapted for connection to means (not shown) for mounting the mirror on a motor vehicle body. A support pillar 44 projects from the interior of the housing 40 and has a spherical formation 46 on its outer end which engages in a socket formation 48 which is integrally moulded onto the back of a plastics reflective member 50 which has a reflective coating on its front surface 52.

The reflective member 50 has a second integrally moulded socket formation 54 which engages with a spherical formation 56 of a screw jack drive unit 58, which may, for example, be as described in EP-A-0272047, and which includes an electric motor to enable the reflective member 50 to be pivoted relative to the housing 40 about an axis through the spherical formation 46 perpendicular to the plane of the drawing. A similar screw jack drive unit (not shown) has its jacking screw engaging with a third spherical socket (not shown) which is integrally moulded with the reflective member 50 to permit adjustment about an axis through the spherical formation 46 orthogonal to the first mentioned axis.

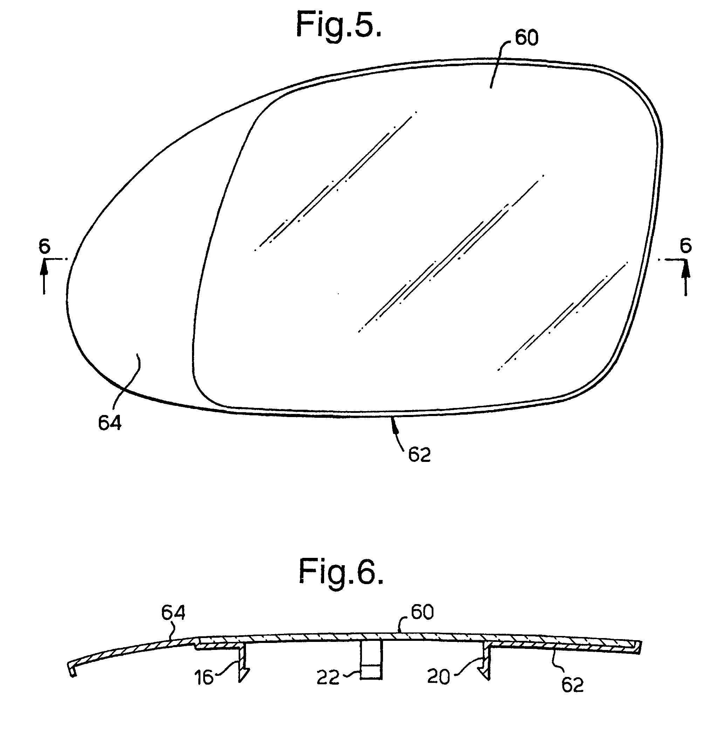

Figures 5 and 6 show the reflective member for a rear view mirror having a main zone which is flat or has a relatively large radius of curvature for providing the principal field of view, together with a side zone of smaller radius of curvature for providing an extended field of view to one side of the main field of view. With this type of mirror, it is acceptable for the quality of the image in the extended field of view to be less than that in the main field of view. The reflective member of Figures 5 and 6 consists of a glass mirror 60 which is secured in recess in a plastics member 62 which has a convex side zone 64 of smaller radius of curvature than the glass mirror 60 and which carries a reflective coating on its surface. Projecting from the rear surface of the member 62 are four lugs 16-22, similar to the correspondingly parts of Figures 1 and 2. Alternatively, the member 62 may be provided with spherical sockets similar to the sockets 46 and 54 of Figure 4.

The reflective coating on the plastics member may be a chromium coating. A heater may be provided on the rear surface of the plastics member.

## Claims

1. A vehicle mirror comprising a housing (40), a reflective member (62), mounting means (30; 46, 56) provided on the inside of the housing (40) and means for attaching the rear surface of the reflective member (62) to the mounting means (30; 46, 56), **characterised in that** the reflective member (62) is moulded from plastics material and has a reflective coating (12) on at least part of its front surface and formations (16-22; 48, 54) on its rear surface adapted to interlock with complementary formations (28; 46, 56) on the mounting means (30; 46, 56); said reflective member (62) having a main zone (60) providing a first field of view comprising a silvered glass reflective member (60) moulded into the plastics reflective member (62) and a zone (64) of higher curvature having said reflective coating (12).

2. A vehicle mirror according to claim 1, wherein the mounting means (46, 56) comprises means for varying the orientation of the reflective member (62) relative to the housing (40).

3. A vehicle mirror according to claim 1 or 2, wherein the reflective member (62) is aspheric.

## Patentansprüche

1. Fahrzeugspiegel mit einem Gehäuse (40), einem reflektierenden Bauteil (62), einer Montagevorrichtung (30; 46, 56) an der Innenseite des Gehäuses (40) und einer Einrichtung zum Befestigen der rückwärtigen Oberfläche des reflektierenden Bauteils (62) an der Montagevorrichtung (30; 46, 56), **dadurch gekennzeichnet, dass** das reflektierende Bauteil (62) aus Kunststoffmaterial geformt ist und eine reflektierende Beschichtung (12) an wenigstens einem Teil seiner vorderen Oberfläche und Ausformungen (16-22; 48, 54) an seiner rückwärtigen Oberfläche aufweist, die geeignet sind, mit komplementären Ausformungen (28; 46, 56) an der Montagevorrichtung (30; 46, 56) zu verriegeln; welches reflektierende Bauteil (62) eine Hauptzone (60) aufweist, die eine erstes Gesichtsfeld schafft und ein versilbertes reflektierendes Glasbauteil (60) enthält, das in das reflektierende Bauteil (62) aus Kunststoff eingeformt ist, und eine Zone (64) mit größerer Krümmung, die die reflektierende Beschichtung (12) aufweist.

2. Fahrzeugspiegel nach Anspruch 1, wobei die Montagevorrichtung (46, 56) eine Einrichtung zum Verändern der Ausrichtung des reflektierenden Bauteils (62) relativ zum Gehäuse (40) aufweist.

3. Fahrzeugspiegel nach Anspruch 1 oder 2, wobei das reflektierende Bauteil (62) asphärisch ist.

## Revendications

1. Rétroviseur comprenant un boîtier (40), un élément réfléchissant (62), un moyen de montage (30 ; 46, 56) placé à l'intérieur du boîtier (40) et un moyen pour attacher la surface arrière de l'élément réfléchissant (62) au moyen de montage (30 ; 46, 56), **caractérisé en ce que** l'élément réfléchissant (62) est moulé en matière plastique et comporte un revêtement réfléchissant (12) sur au moins une partie de sa surface avant et des formes (16-22 ; 48, 54) sur sa surface arrière adaptées pour s'accoupler à des formes complémentaires (28 ; 46, 56) prévues sur le moyen de montage (30 ; 46, 56), ledit élément réfléchissant (62) ayant une zone principale (60) fournissant un premier champ de vision comprenant un élément réfléchissant en verre argenté (60) moulé dans l'élément réfléchissant en plastique (62) et une zone (64) de courbure plus importante ayant ledit revêtement réfléchissant (12).

2. Rétroviseur selon la revendication 1, dans lequel le moyen de montage (46, 56) comprend un moyen servant à faire varier l'orientation de l'élément réfléchissant (62) par rapport au boîtier (40).

3. Rétroviseur selon la revendication 1 ou 2, dans lequel l'élément réfléchissant (62) est asphérique.
